# EUROPEAN PATENT APPLICATION

(11) **EP 1 832 448 A1**
(43) Date of publication of application: **12.09.2007**
(21) Application number: 05719993.7
(22) Date of filing: 04.03.2005
(51) Int. Cl.: B60G 9/04

(54) **TORSION BEAM SUSPENSION**

(71) Applicant: F. Tech Incorporation, Minamisaitama-gun, Saitama 346-0194 (JP)
(72) Inventor: INOUE, Mitsuru c/o Tech. Center of F.Tech Inc., Haga-gun, Tochigi 3213325 (JP); KIKUCHI, Fumio c/o Tech. Center of F.Tech Inc., Haga-gun, Tochigi 3213325 (JP)
(74) Representative: Trossin, Hans-Jürgen
(86) International application number: PCT/JP2005/003721
(87) International publication number: WO 2006/095386

(57) **Abstract**

A torsion beam suspension is provided in which an open end face at the rear end of a trailing arm is butt-welded to a spindle support plate, wherein a front bent flange (13F) is provided integrally with a front end part of a plate main body (13M) of the spindle support plate (13), the front bent flange (13F) extending forward along an outer face of a rear end part of the trailing arm (10) and having its front edge welded (w3) to the outer face of the rear end part, and a rear bent flange (13R) is provided integrally with a rear end part of the plate main body (13M), the rear bent flange (13R) engaging with and being welded (w4) to a rear edge part of the trailing arm (10), a spindle base plate (14b) being superimposed on and secured (w2) to an outer face of the plate main body (13M) and comprising four threaded hole portions (Sfu, Sfd, Sru, Srd) for bolting a brake related plate-shaped component (P) to the spindle base plate (14b), the four threaded hole portions (Sfu, Sfd, Sru, Srd) being at front, rear, upper, and lower positions with the spindle axis interposed therebetween. This enables the spindle support plate to be made thin while suppressing the influence of thermal distortion from welding, thus achieving light weight and a low cost.

## Description

### TECHNICAL FIELD

The present invention relates to a torsion beam suspension in which opposite ends of a torsion beam extending in a substantially lateral direction of a vehicle body are connected to left and right trailing arms extending in a substantially longitudinal direction of the vehicle body and swinging vertically, and a spindle for axially supporting a wheel is fixed to a spindle support plate welded to the left and right trailing arms.

### BACKGROUND ART

Conventionally, such a torsion beam suspension is known, as disclosed in, for example, Patent Publication 1 below, and in this arrangement since the trailing arm is in the form of a hollow pipe, a closed cross-section arm structure having good cross-sectional efficiency can be obtained using relatively low cost production equipment.

In this known arrangement, in order to reduce the influence of thermal distortion from welding by spacing the welded joint away from a seating face for mounting the spindle, a large bracket overhanging the upper side of the trailing arm is welded thereto, and the spindle support plate is fixed to the bracket. Because of this, the spindle axis is offset by a large amount from the main cross-section of the trailing arm via the bracket, which is U-shaped, it is necessary to ensure a sufficient thickness for the bracket in order to reliably support the load from the wheel, and as a result there is the problem that there is a large increase in weight.
Patent Publication 1: Japanese Patent Application Laid-open No. 2000-94917

### DISCLOSURE OF INVENTION

### PROBLEMS TO BE SOLVED BY THE INVENTION

In order to eliminate the large bracket so as to solve the problem of Patent Publication 1 above, for example, as illustrated in FIG. 15, an arrangement has already been proposed in which the rear end of a hollow pipe-shaped trailing arm 010 is directly butt-welded to a plate-shaped spindle support plate 013, and a flange-shaped spindle base plate integral with a spindle 014 is bolted to the spindle support plate 013; in this arrangement not only can the weight be reduced by eliminating the bracket, which has a large weight, but it also becomes possible to bring an axis L of the spindle 014 close to the main cross-section of the trailing arm 010, which is advantageous in terms of strength.

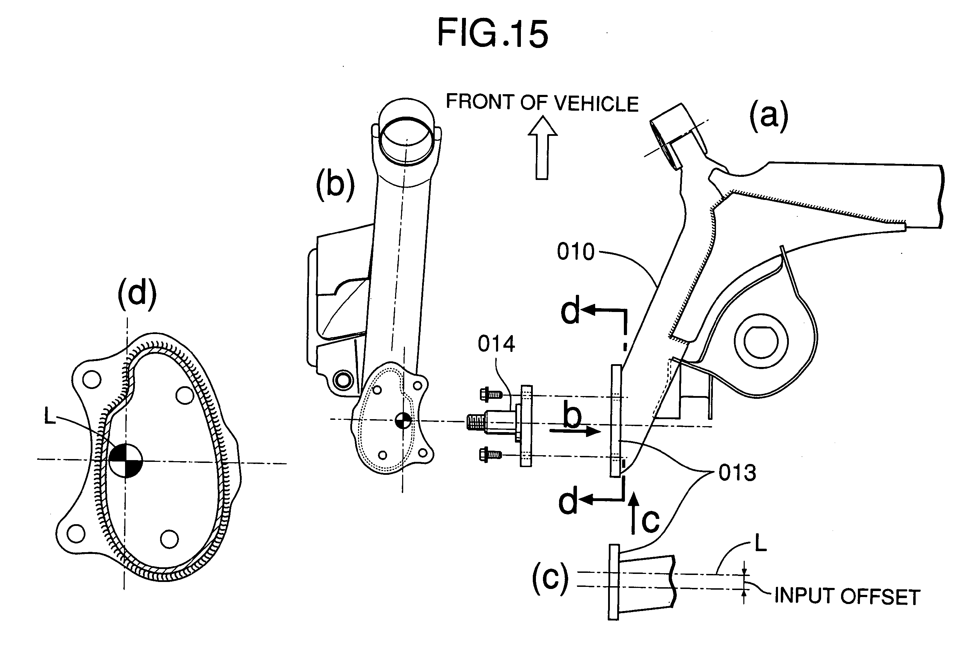

However, in the above-mentioned proposed arrangement, since the welded joint between the rear end of the trailing arm and the flat plate-shaped spindle support plate is provided only in portions where the two abut against each other, in order to ensure that there is sufficient strength and rigidity of the joint therebetween, it is necessary to subject the entire periphery thereof to a welding treatment (see FIG. 15 (d)), and in this case the welded portion on the front side of the vehicle is particularly important since it is necessary for transmitting a large external input to a main cross-section of the trailing arm.

On the other hand, with regard to the spindle support plate, in relation to the axle side (spindle, brake-related back plate, splash plate, etc.) being retained by bolting, it is desirable to arrange positions where a threaded hole portion into which a bolt is tightened are machined in a dispersed manner with a good balance between four positions in the longitudinal and vertical directions relative to the spindle axis, but since the tightening positions are restricted due to space-related design constraints (arrangement of the brake system, etc.), if the position where the rear end of the trailing arm abuts against the spindle support plate is set so as to go around the positions where the threads have been machined, one of the upper and lower pairs of front and rear threaded hole portions is disposed outside the arm open end face, and the other one of the upper and lower pairs of front and rear threaded hole portions is disposed inside the open end face. In any event, since all of the four portions where the threads are machined are close to the butt-welded parts, there is a deterioration (thermal deformation) of the thread precision due to the influence of the heat of welding, and because of this it is necessary to ensure the thread precision by machining the threads after welding or re-tapping after welding and, furthermore, the other one of the upper and lower pairs of front and rear threaded hole portions overhangs the exterior of the open end face of the trailing arm, which is a main factor in causing the spindle support rigidity to be degraded.

Moreover, in relation to machining a thread for fixing the spindle, etc. to the spindle support plate, it is necessary to ensure that there is an effective thread length required for the securing force for the spindle, and a plate thickness appropriate for the securing force is required. In relation to the spindle side mounting being joined by a bolt, the spindle support plate is required to have precision flatness after welding, and from this viewpoint the plate is required to have a thickness sufficient to ensure that it is not affected by thermal distortion from welding. As described above, since the spindle support plate has a considerably thick structure, if a product is to be supplied by press stamping, it is necessary to employ large specialized press-forming equipment, thus greatly increasing the cost, and if a product is to be supplied by hot forging, the number of steps increases due to face cutting, etc., which also results in an increase in cost.

Furthermore, the present applicant has proposed an improved idea in which, in order to solve the above-mentioned problems by suppressing the occurrence of thermal distortion accompanying welding while reducing the weight by decreasing the thickness of the spindle support plate, bent flanges formed on four corners on the outer periphery of a plate main body of a spindle support plate are fitted onto and welded to the outer periphery of a rear end part of the trailing arm to thus fix the plate (ref. e.g. Japanese Patent Application No. 2002-199449), but in this improved idea, since in the case of a pipe structure in which a rear half of a trailing arm extends substantially linearly, its open end face becomes a cut face that intersects the arm axis obliquely, it becomes impossible to make the bent flange fit onto the outer periphery of the rear end part of the trailing arm, and the idea is difficult to apply. Furthermore, it is necessary for all four threaded hole portions for mounting the spindle, etc., which are arranged in a dispersed manner between four positions in the longitudinal and vertical directions relative to the spindle axis, to be contained inside the open end face of the arm rear end, and the degrees of freedom in selecting positions for arranging the threaded hole portions are accordingly restricted.

The above-mentioned technical problems exist not only in a structure in which a spindle base plate is joined by a bolt to a spindle support plate but also in a structure in which, for example, a spindle base plate is secured to a spindle support plate by securing means such as welding, and a brake related plate-shaped component (back plate or splash plate) disposed adjacent to the outer face of the spindle base plate is joined to the spindle base plate by a bolt.

The present invention has been accomplished under the above-mentioned circumstances, and it is a main object thereof to greatly decrease the thickness of a spindle support plate of a torsion beam suspension to thus achieve light weight and save cost while solving the above-mentioned problems of the conventional structure.

### MEANS FOR SOLVING PROBLEMS

In order to attain the above object, according to a first aspect of the present invention, there is proposed a torsion beam suspension in which opposite ends of a torsion beam extending in a substantially lateral direction of a vehicle body are connected to left and right trailing arms that are formed in a hollow pipe shape, have at least a rear half extending in a substantially longitudinal direction of the vehicle body, and swing vertically, an open end face at the rear end of each of the left and right trailing arms is formed as a cut face intersecting the arm axis obliquely, the open end face is butt-welded to a plate main body of a spindle support plate, and the plate main body supports a spindle base plate and a brake related plate-shaped component, the spindle base plate being provided integrally with a spindle for axially supporting a wheel, and the brake related plate-shaped component being disposed adjacent to the outer face of the spindle base plate, characterized in that a front bent flange is provided integrally with a front end part of the plate main body, the front bent flange extending forward along an outer face of a rear end part of the trailing arm and being welded to the outer face of the rear end part, and a rear bent flange is provided integrally with a rear end part of the plate main body, the rear bent flange engaging with and being welded to a rear edge part of the trailing arm, the spindle base plate being superimposed on and secured to an outer face of the plate main body and comprising four threaded hole portions at front, rear, upper, and lower positions with a spindle axis interposed therebetween, and four bolts for fastening the brake related plate-shaped component to the spindle base plate being screwed into the four threaded hole portions.

According to a second aspect of the present invention, there is proposed a torsion beam suspension in which opposite ends of a torsion beam extending in a substantially lateral direction of a vehicle body are connected to left and right trailing arms that are formed in a hollow pipe shape, have at least a rear half extending in a substantially longitudinal direction of the vehicle body, and swing vertically, an open end face at the rear end of each of the left and right trailing arms is formed as a cut face intersecting the arm axis obliquely, the open end face is butt-welded to a plate main body of a spindle support plate, and the plate main body supports at least a spindle base plate, the spindle base plate being provided integrally with a spindle for axially supporting a wheel, characterized in that a front bent flange is provided integrally with a front end part of the plate main body, the front bent flange extending forward along an outer face of a rear end part of the trailing arm and being welded to the outer face of the rear end part, and a rear bent flange is provided integrally with a rear end part of the plate main body, the rear bent flange engaging with and being welded to a rear edge part of the trailing arm, the plate main body comprising four threaded hole portions at front, rear, upper, and lower positions with a spindle axis interposed therebetween, and four bolts for fastening the spindle base plate or a brake related plate-shaped component disposed in the vicinity of the spindle base plate being screwed into the four threaded hole portions.

According to a third aspect of the present invention, in addition to the arrangement of the first or second aspect, at least one of the threaded hole portions is positioned outside the open end face.

According to a fourth aspect of the present invention, in addition to the arrangement of the first or second aspect, the front bent flange is formed so as to have a substantially U-shaped cross-section by integrating a front flange portion, an upper flange portion, and a lower flange portion with each other and butt-welding to an outer face, an upper face, and a lower face of a rear end part of the trailing arm respectively, and the upper flange portion and the lower flange portion are continuous as a unit with an upper bent flange and a lower bent flange provided so as to be connected integrally to the upper edge and the lower edge of the plate main body respectively so as to correspond to the two, that is, front upper and lower, threaded hole portions.

According to a fifth aspect of the present invention, in addition to the arrangement of the first or second aspect, the rear end part of each of the left and right trailing arms is provided with an expanded tube portion protruding either upward or downward so as to pass a joining line, or the vicinity thereof, that joins the axes of one of the upper or lower pair of front and rear threaded hole portions outside the open end face, while the open end face goes around the front and rear threaded hole portions.

According to a sixth aspect of the present invention, in addition to the arrangement of the first or second aspect, the open end face at the rear end of each of the left and right trailing arms and the plate main body are welded along the peripheral direction of the open end face apart from at least a region that corresponds to the threaded hole portion outside the open end face.

According to a seventh aspect of the present invention, in addition to the arrangement of the first or second aspect, the rear bent flange is in intimate contact with a chamfered portion formed in a rear end part of the open end face of the trailing arm, and the rear edge of the chamfered portion is welded to the rear bent flange.

According to an eighth aspect of the present invention, in addition to the arrangement of the first or second aspect, a base shaft portion of the spindle is press-fitted into a spindle support hole formed in the plate main body by burring.

According to a ninth aspect of the present invention, in addition to the arrangement of the eighth aspect, the extremity of the base shaft portion of the spindle runs through the interior of the trailing arm and projects outside, and the projecting portion is welded to the trailing arm.

According to a tenth aspect of the present invention, in addition to the arrangement of the first aspect, a through hole or a recess is formed in the plate main body, the through hole or the recess being capable of receiving a shaft end part of the bolt screwed into the threaded hole portion.

According to an eleventh aspect of the present invention, in addition to the arrangement of the second aspect, the four threaded hole portions are formed from four nuts projection welded to the plate main body and arranged so as to be spaced from each other at front, rear, upper, and lower positions relative to a spindle axis.

It should be noted here that "a brake related plate-shaped component" in the present invention corresponds to a various type of brake related plate-shaped components, for example, a back plate for a drum brake or a splash plate for a disk brake for mudguard, which is arranged in the vicinity of the spindle base plate and fixed by a bolt to the spindle base plate or the spindle support plate.

### EFFECTS OF THE INVENTION

As hereinbefore described, in accordance with the aspects of the present invention, with regard to the torsion beam suspension in which the open end face at the rear end of the trailing arm is formed as a cut face that intersects the arm axis obliquely and this open end face is butt-welded to the plate main body of the spindle support plate, since the front bent flange extending forward along the outer face of the rear end part of the trailing arm and being welded to the outer face of the rear end part is provided integrally with the front end part of the plate main body of the spindle support plate, and the rear bent flange engaging with and being welded to the rear edge part of the trailing arm is provided integrally with the rear end part of the plate main body, even if the spindle support plate is formed so as to be thin, the rigidity of the front end part and rear end part of the plate main body can be enhanced effectively, thermal deformation of the plate main body due to thermal distortion when the arm open end is butt-welded thereto is suppressed effectively by the front and rear bent flanges, the area to which the arm open end is welded can be minimized, deformation of the seat face due to thermal distortion of the plate main body, which is made thin, is therefore suppressed effectively, and it is possible to ensure that there is precision flatness after welding, which is necessary for mounting the spindle base plate. In particular, since extending the front bent flange forward along the outer face of the rear end part of the trailing arm and welding its front edge to the arm outer face enables the spindle support plate to be welded to the trailing arm at a position as far forward as possible from the spindle axis, not only can the influence of thermal distortion be eliminated, but it is also possible to reduce the burden on the welded part as a result of good load transmission efficiency from the spindle support plate to the trailing arm, thereby improving the durability and increasing the strength.

Furthermore, in accordance with the first aspect of the present invention in particular, since the spindle base plate is superimposed on and fixed to the outer face of the plate main body and includes the four threaded hole portions at front, rear, upper, and lower positions with the spindle axis interposed therebetween, the four bolts for joining the brake related plate-shaped component to the spindle base plate being screwed into the four threaded hole portions, it is possible to handle an integral assembly of the trailing arm, the spindle support plate, and the spindle as a subassembly (small assembly), thus reducing the number of components and improving the efficiency of assembly of a vehicle. Furthermore, the above-mentioned bolt only needs to have a length that enables it to be screwed into the threaded hole portion of the spindle base plate in order to secure the brake related plate-shaped component; it is unnecessary to specially provide a weld nut on the reverse side of the spindle support plate, and the weight of the suspension can therefore be reduced by a corresponding amount.

Moreover, in accordance with the second aspect of the present invention in particular, since the plate main body includes the four threaded hole portions at front, rear, upper, and lower positions with the spindle axis interposed therebetween, four bolts for joining the spindle base plate or the brake related plate-shaped component to the plate main body being screwed into the four threaded hole portions, when it becomes necessary to replace either of the spindle or the brake related plate-shaped component, or the trailing arm due to wear, deformation, etc., only one thereof needs to be replaced, and the cost of replacement can be reduced by a corresponding amount.

Furthermore, in accordance with the third aspect of the present invention in particular, since at least one of the threaded hole portions is positioned outside the arm open end face, compared with a case in which four all threaded hole portions are contained inside the open end face of the arm rear end, the degrees of freedom in selecting the positions where the threaded hole portions are disposed are greatly increased and, moreover, even if some of the threaded hole portions are disposed outside the open end face of the arm, it is possible to easily ensure that there is sufficient support rigidity for the outside threaded hole portions by specially providing the above-mentioned front and rear bent flanges.

Moreover, in accordance with the fourth aspect of the present invention in particular, since the front bent flange is formed so as to have a substantially U-shaped cross-section by integrating the front flange portion, the upper flange portion, and the lower flange portion and butt-welding them to the outer face, upper face, and lower face of the arm rear end part respectively, the arm rear end part is supported so as to be clasped stably by the front bent flange, and the moment span on the joint between the front bent flange and the trailing arm is enlarged in both longitudinal and vertical directions to thus reduce the support stress occurring in each welded part, thereby further improving the durability and increasing the strength. Furthermore, since the upper flange and the lower flange are continuous as a unit with the upper bent flange and the lower bent flange respectively, which are connected integrally to the upper edge and the lower edge of the plate main body respectively so as to correspond to the two, that is, upper and lower, threaded hole portions on the front side, the flexural rigidity of the plate main body is further enhanced, and the support rigidity of the front and rear threaded hole portions outside the arm open end face is further strengthened.

Moreover, in accordance with the fifth aspect of the present invention in particular, since the rear end part of the trailing arm is provided with the expanded tube portion protruding either upward or downward so as to pass the joining line, or the vicinity thereof, that joins the axes of one of the upper or lower pair of the front and rear threaded hole portions outside the open end face, while the open end face goes around the front and rear threaded hole portions, together with the effect brought about by the arm rear half being in a pipe shape extending in a substantially longitudinal direction and being relatively easily formed, the arm rear end part can be enlarged vertically without difficulty while avoiding interference with the threaded hole portion, and this expanded tube effect enables the efficiency of support of the load transmitted from the spindle support plate to the trailing arm side to be enhanced, thus improving the support rigidity in the vertical direction (support rigidity in a camber direction).

Moreover, in accordance with the sixth aspect of the present invention, since the open end face at the rear end of the trailing arm and the plate main body are welded to each other along the peripheral direction of the open end face apart from at least a region that corresponds to the threaded hole portion outside the open end face, it is possible to eliminate the welding in the vicinity of the outside threaded hole portion, which greatly affects the post-welding precision flatness necessary for mounting the spindle, etc. on the plate main body, the occurrence of collapsing due to thermal shrinkage during cooling after welding can be prevented effectively, and sufficient precision flatness can be guaranteed.

Furthermore, in accordance with the seventh aspect of the present invention in particular, since the rear bent flange is in intimate contact with the chamfered portion formed on the rear end part of the open end face of the trailing arm, and the rear edge of the chamfered portion is welded to the rear bent flange, it is possible to appropriately weld the rear bent flange and the arm rear edge without difficulty.

Moreover, in accordance with the eighth aspect of the present invention in particular, making the spindle support plate thin enables the spindle support hole to be formed without difficulty by burring the plate main body, and press-fitting and fixing the base shaft portion of the spindle into the spindle support hole enables the support structure for the spindle to be simplified and the weight to be reduced.

Furthermore, in accordance with the ninth aspect of the present invention in particular, since the extremity of the base shaft portion of the spindle runs through the interior of the trailing arm and projects outward, and the projecting portion is welded to the trailing arm, the spindle can be firmly fixed to the trailing arm without allowing the heat of welding to affect the spindle support plate.

Moreover, in accordance with the tenth aspect of the present invention in particular, since the plate main body is provided with a through hole or a recess that can receive the shaft end of each bolt screwed into the threaded hole portion, it is possible to ensure that there is a sufficient effective length for the threaded hole portion and the bolt to be screwed together, and formation of the through hole or recess reduces the weight of the plate main body by a corresponding amount.

Furthermore, in accordance with the eleventh aspect of the present invention in particular, since the threaded hole portions are formed from four nuts joined by projection welding to the plate main body and arranged so as to be spaced from each other at front, rear, upper, and lower positions relative to the spindle axis, even if the plate main body is made thin, each nut can easily and appropriately be fixed to the plate main body by projection welding and, moreover, a sufficient thread length can be guaranteed without special threading of the plate main body, thus saving cost.

### BRIEF DESCRIPTION OF DRAWINGS

[FIG. 1] FIG. 1 is a plan view of a left half of a torsion beam suspension related to a first embodiment.
[FIG. 2] FIG. 2 is an enlarged view from arrow 2 in FIG. 1 (sectional view along line 2-2 in FIG. 3).
[FIG. 3] FIG. 3 is an enlarged sectional view along line 3-3 in FIG. 2.
[FIG. 4] FIG. 4 is an enlarged sectional view along line 4-4 in FIG. 3.
[FIG. 5] FIG. 5 is an enlarged sectional view along line 5-5 in FIG. 3.
[FIG. 6] FIG. 6 is a view, corresponding to FIG. 2, showing a first modification example of the first embodiment.
[FIG.7] FIG. 7 is a view, corresponding to FIG. 3, showing a second modification example of the first embodiment.
[FIG. 8] FIG. 8 is a plan view of a left half of a torsion beam suspension related to a second embodiment.
[FIG. 9] FIG. 9 is an enlarged view from arrow 9 in FIG. 8.
[FIG. 10] FIG. 10 is an enlarged sectional view along line 10-10 in FIG. 9.
[FIG. 11] FIG. 11 is an enlarged sectional view along line 11-11 in FIG. 10.
[FIG. 12] FIG. 12 is an enlarged sectional view along line 12-12 in FIG. 10.
[FIG. 13] FIG. 13 is a view, corresponding to FIG. 9, showing a first modification example of the second embodiment.
[FIG. 14] FIG. 14 is a view, corresponding to FIG. 10, showing a second modification example of the second embodiment.
[FIG. 15] FIG. 15 is an exploded view and views from arrows b, c, and d therein, showing essential parts of a conventional example.

### EXPLANATION OF REFERENCE NUMERALS AND SYMBOLS

- 10, 110: Trailing Arm
- 10a, 110a: Open End Face
- 10ar, 110ar: Chamfered Portion
- 10s, 110s: Expanded Tube Portion
- 11, 111: Torsion Beam
- 13, 113: Spindle Support Plate
- 13D, 113D: Lower Bent Flange
- 13F, 113F: Front Bent Flange
- 13Ff, 113Ff: Front Flange Portion
- 13Fd, 113Fd: Lower Flange Portion
- 13Fu, 13Fu: Upper Flange Portion
- 13h, 113h: Spindle Support Hole
- 13M, 113M: Plate Main Body
- 13R, 113R: Rear Bent Flange
- 13U, 113U: Upper Bent Flange
- 14, 114: Spindle
- 14b, 114b: Spindle Base Plate
- B, B': Bolt
- L: Spindle Axis
- P, P': Back Plate (Brake Related Plate-Shaped Component)
- Sfu, Sfd, Sru, Srd: Threaded Hole Portion
- Nfu, Nfd, Nru, Nrd: Nut (Threaded Hole Portion)
- W: Wheel
- w1 to w5, w11 to w15: Welding

### BEST MODE FOR CARRYING OUT THE INVENTION

Modes for carrying out the present invention are specifically explained by reference to embodiments of the present invention illustrated in the attached drawings.

### EMBODIMENT 1

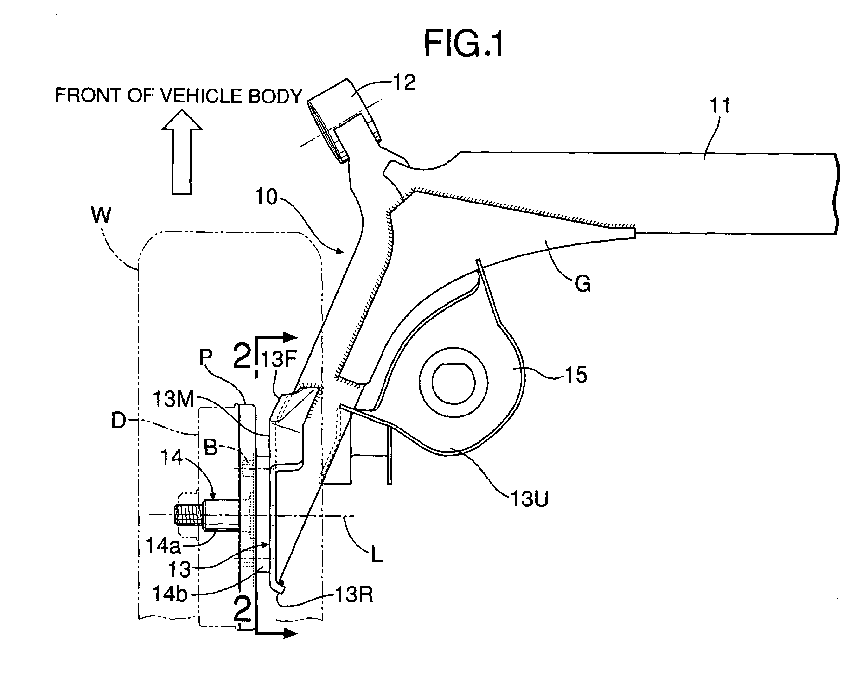

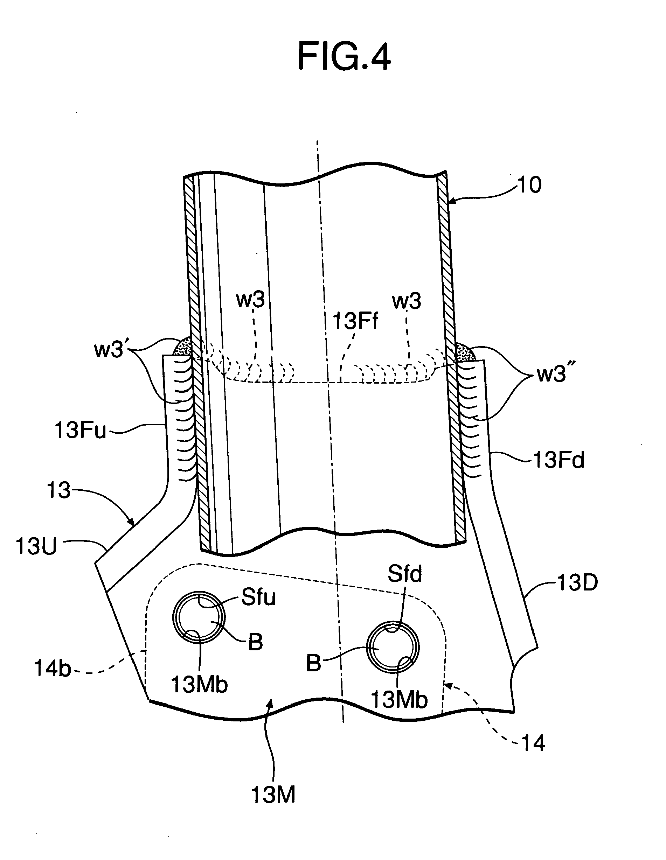

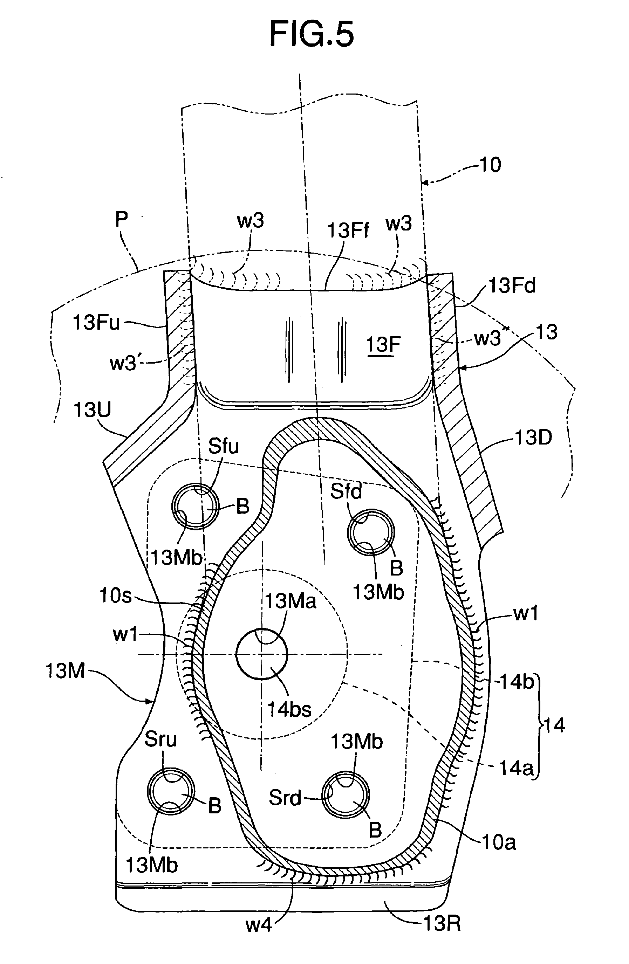

FIG. 1 to FIG. 5 show a first embodiment of the present invention.

Firstly, FIG. 1 is a plan view of a left half of a torsion beam suspension for a rear wheel of an automobile; a right half has a symmetrical structure relative to a longitudinally central line of a vehicle body. This torsion beam suspension includes a pair of left and right trailing arms 10 extending substantially linearly in a substantially longitudinal direction of the vehicle body and a torsion beam 11 extending in a substantially lateral direction of the vehicle body and integrally joining the left and right trailing arms 10, and a gusset G is welded between an end part of the torsion beam 11 and a middle part of the trailing arm 10, the gusset G enhancing the strength of the joint therebetween.

A cylindrical trailing arm support part 12 is welded to the front end of each trailing arm 10, and the front end of each trailing arm 10 is pivotably supported on the vehicle body in a vertically swingable manner via a rubber bush joint (not illustrated) housed in the trailing arm support part 12. A rear wheel W is rotatably supported on a spindle 14 fixed to a spindle support plate 13 welded to the outer end of a rear part of each trailing arm 10, and a spring seat 15 is provided so as to extend between and be joined to a middle part of the trailing arm 10 and the gusset G, the spring seat 15 supporting the lower end of a suspension spring.

The entirety of the trailing arm 10 is formed from a hollow metal pipe; its front end portion is slightly narrowed and welded to the trailing arm support part 12, and the remaining portion (that is, the main portion) extends in a straight line up to its rear end at an angle relative to the axis of the front end portion. An open end face 10a, having a closed cross-section, at the rear end of the trailing arm 10 is formed as a cut face that intersects the arm axis obliquely and is substantially vertical along the longitudinal direction of the vehicle body, and the open end face 10a is butt-welded w1 to the reverse side of the spindle support plate 13. In the present invention, instead of a seamless pipe structure as shown in the figure, a hollow pipe-shaped member formed by integrally welding to each other outer peripheral parts of an upper half and a lower half press-formed from a metal sheet may be used to form the trailing arm 10.

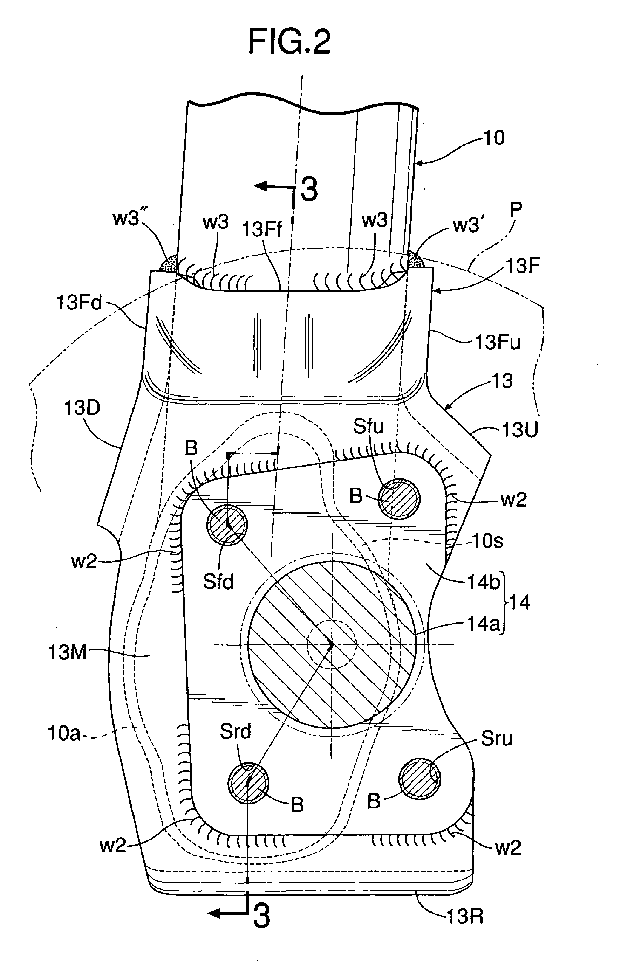

The spindle support plate 13 and a structure with which it is joined to the trailing arm 10 are now explained by reference to FIG. 2 to FIG. 5 in combination.

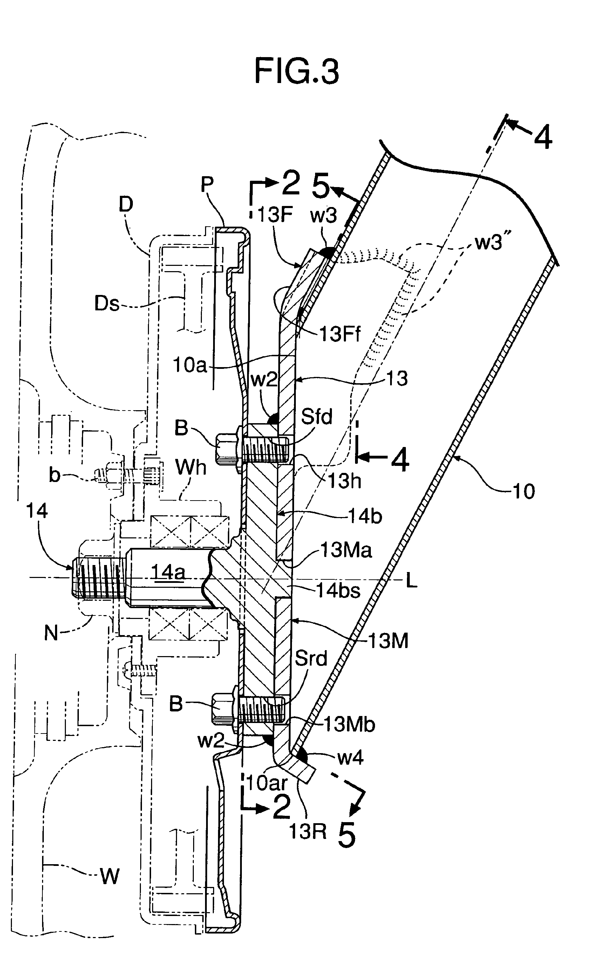

The spindle support plate 13 has a substantially rectangular plate main body 13M, which is larger than the open end face 10a at the rear end of the trailing arm 10 and the reverse side of which thereby abuts against the open end face 10a. The front side of the plate main body 13M (left-hand face in FIG. 3) is a flat mounting seat face opposite the spindle 14, which axially supports the wheel W. That is, the spindle 14 includes a stepped shaft-shaped spindle main body 14a axially supporting the wheel W and a rectangular flange-shaped spindle base plate 14b formed integrally with a base of the spindle main body 14a, and the spindle base plate 14b is superimposed on the front side of the plate main body 13M of the spindle support plate 13 and welded w2 thereto.

A drum brake back plate P, which is attached to the wheel W as a brake related plate-shaped component, is superimposed on and disposed on the outer face of the spindle base plate 14b. Four threaded hole portions Sfu, Sfd, Sru, and Srd into which four bolts B for securing the back plate P to the plate main body 13M are respectively screwed and tightened are provided spaced from each other in the spindle base plate 14b at front, rear, upper, and lower positions relative to the spindle axis L (that is, so as to surround the axis L while longitudinally and vertically sandwiching the axis L). At least any one of the four threaded hole portions (the two at the upper front and upper rear in the illustrated example), that is, the threaded hole portions Sfu and Sru, are disposed at positions corresponding to the outside of the open end face 10a, and the other ones (the two at the lower front and lower rear in the illustrated example), that is, the threaded hole portions Sfd and Srd are disposed at positions corresponding to the inside of the open end face 10a. As shown in FIG. 2, the spindle base plate 14b is welded w2 to the plate main body 13M via at least one part, the four corners in the illustrated example, of the outer periphery of the spindle base plate 14b (that is, portions corresponding to the four threaded hole portions Sfu, Sfd, Sru, and Srd).

A hub portion Wh of the wheel W is rotatably fitted onto and supported by the spindle main body 14a via a bearing, and the hub portion Wh is prevented from coming off the spindle main body 14a by a spindle nut N screwed around a threaded portion of the outer end of the spindle main body 14a. A brake drum D of a drum brake and an inner peripheral part of the wheel W are secured together to the hub portion Wh via a plurality of bolts b, and the back plate P is provided with a brake shoe Ds that can come into pressure contact with the brake drum D and a wheel cylinder (not illustrated) that makes the brake shoe Ds operate. The structure with which such a wheel hub portion Wh is secured to the spindle 14 and the internal structure of the drum brake are known conventionally, and therefore will not be explained in any further detail.

Furthermore, a spindle support hole 13h is formed in the plate main body 13M on an extension of the spindle axis L, and an engagement projection 14bs projectingly provided integrally with the reverse side of the spindle base plate 14b is fitted into the spindle support hole 13h, thus positioning the spindle 14 relative to the spindle plate 13. Furthermore, formed in the plate main body 13M at positions corresponding to the four threaded hole portions Sfu, Sfd, Sru, and Srd are through holes 13Mb or recess holes receiving shaft end parts of four bolts B screwed into the threaded hole portions.

Furthermore, a front bent flange 13F is connected integrally to the front end part of the plate main body 13M, the front bent flange 13F extending vertically throughout substantially the whole region between upper and lower ends of the front end part of the plate main body 13M and being bent toward the inside of the vehicle body, and a rear bent flange 13R is connected integrally to the rear end part of the plate main body 13, the rear bent flange 13R extending vertically throughout substantially the whole region between upper and lower ends of the rear end part of the plate main body 13M and being bent toward the inside of the vehicle body. The front bent flange 13F extends forward along the outer face of the rear end part of the trailing arm 10, at least the front edge of the flange 13F is welded w3 to the outer face of the rear end part of the arm 10, and the rear bent flange 13R engages with a rear edge part of the trailing arm 10 and is welded w4 thereto.

Moreover, in the illustrated example, the front bent flange 13F is formed so as to have a substantially U-shaped cross-section by integrating together a front flange portion 13Ff, an upper flange portion 13Fu, and a lower flange portion 13Fd that abut against the outer face, the upper face, and the lower face of the rear end part of the trailing arm 10 so as to clasp the rear end part thereof. In particular, the front flange portion 13Ff is slightly curved so as to substantially follow the outer periphery of the rear end part of the trailing arm 10, its forward edge (that is, the front edge) apart from a central expanded portion of the front flange portion 13Ff is welded w3 to the outer face of the arm rear end part, the front edge and inner edge of the upper flange portion 13Fu are welded w3' to the upper face of the arm rear end part, and the front edge and inner edge of the lower flange portion 13Fd are welded w3" to the lower face of the arm rear end part.

Furthermore, an upper bent flange 13U and a lower bent flange 13D are provided so as to be connected integrally to the upper edge and the lower edge of the plate main body 13M respectively, the upper bent flange 13U and the lower bent flange 13D corresponding to the front upper and lower threaded hole portions Sfu and Sfd respectively and each being bent toward the inside of the vehicle body, and front end sides of the upper bent flange 13U and the lower bent flange 13D are continuous as a unit with the upper flange portion 13Fu and the lower flange portion 13Fd respectively.

An expanded tube portion 10s is formed on an upper half of the rear end part of each of the trailing arms 10, the expanded tube portion 10s protruding upward so as to pass a joining line, or the vicinity thereof, that joins the axes of the two threaded hole portions Sfu and Sru, while a top part of the open end face 10a of the arm rear end goes around the two upper front and rear threaded hole portions Sfu and Sru (that is, outside the open end face 10a) along the peripheral directions thereof. This expanded tube portion 10s is formed simultaneously in a step of forming a clearance shape for the above-mentioned two threaded hole portions Sfu and Sru, and in this case since the trailing arm 10 has a substantially linear pipe structure, forming of the expanded tube portion 10s is relatively easily carried out.

Specially providing such an expanded tube portion 10s enables the efficiency of supporting a load transmitted vertically from the spindle support plate 13 toward the trailing arm 10 to be enhanced and the rigidity of vertical support (support rigidity in the camber direction) to be improved.

Furthermore, the open end face 10a at the rear end of the trailing arm 10 and the plate main body 13M are welded w1 along the peripheral direction of the open end face 10a apart from a region corresponding to at least the two upper front and rear threaded hole portions Sfu and Sru (moreover, in the illustrated example, a front end part region). This enables the necessity for welding in the vicinity of the two threaded hole portions Sfu and Sru, which most affects the post-welding precision flatness necessary for mounting the spindle on the plate main body 13M, to be eliminated, and the occurrence of collapsing due to thermal shrinkage during cooling after welding to be prevented effectively, thus ensuring that there is sufficient precision flatness.

Furthermore, the rear bent flange 13R is in intimate contact with a chamfered portion 10ar formed on the rear end part of the open end face 10a at the rear end of the trailing arm 10, and the rear edge of the chamfered portion 10ar is welded w4 to the rear bent flange 13R. Forming such a chamfered portion 10ar on the open end face 10a at the arm rear end enables the welding w4 between the rear bent flange 13R and the rear edge of the trailing arm 10 to be carried out appropriately without difficulty.

In accordance with the structure of the first embodiment described above, the front bent flange 13F, which extends forward along the outer face of the rear end part of the trailing arm 10 and is welded w3 to the outer face of the rear end part, is connected integrally to the front end part of the plate main body 13M of the spindle support plate 13, the rear bent flange 13R, which engages with the rear edge part of the trailing arm 10 and is welded w4 thereto, is connected integrally to the rear end part of the plate main body 13M, and the spindle base plate 14b is superimposed on and fixed (in the illustrated example, by the weld w2) to the outer face of the plate main body 13M and includes the four threaded hole portions Sfu, Sfd, Sru, and Srd arranged so as to be spaced from each other at front, rear, upper, and lower positions relative to the spindle axis L, the four bolts B for fixing the back plate P, which is a brake related plate-shaped component, being screwed into the threaded hole portions Sfu, Sfd, Sru, and Srd respectively.

This enables the spindle support plate 13 to be made thin since there is no necessity for providing a threaded hole portion for a spindle-fastening bolt B to be inserted into, and even if the spindle support plate 13 is press-formed from a thin metal plate in this way, the rigidity of the front end part and the rear end part of the plate main body 13M, and in particular the support rigidity of the front and rear threaded hole portions Sfu and Sru outside the arm open end face 10a, can be enhanced, thermal deformation of the plate main body 13M due to thermal distortion when butt-welding w1 the arm open end can be suppressed effectively by the front and rear bent flanges, the welding region w1 of the arm open end can be minimized, deformation of the seat face of the thin plate main body 13M due to thermal distortion can therefore be suppressed effectively by the front and rear bent flanges 13F and 13R, and it is possible to ensure the post-welding precision flatness necessary for mounting the spindle base plate.

Furthermore, since the front bent flange 13M in particular extends forward along the outer face of the arm rear end part and has at least its front edge welded w3 to the arm outer face, the spindle support plate 13 can be welded to the trailing arm 10 at a position sufficiently far forward from the spindle axis L; this can not only eliminate the influence of the above-mentioned thermal distortion but also the efficiency of transmitting a load from the spindle support plate 13 to the trailing arm 10 becomes very good, the burden imposed on the welded part w3 is lightened, the durability is improved, and the strength is increased.

Moreover, as in the illustrated example, since the front bent flange 13F is formed so as to have a substantially U-shaped cross-section by integrating the front flange portion 13Ff, the upper flange portion 13Fu, and the lower flange portion 13Fd and butt-welding w3, w3', and w3" them to the outer face, the upper face, and the lower face of the arm rear end part respectively, the arm rear end part is supported by being clasped stably by the front bent flange 13F. This enables the moment span on the joint between the front bent flange 13F and the trailing arm 10 to be enlarged in both longitudinal and vertical directions to thus reduce the support stress occurring in each welded part, thereby further improving the durability and increasing the strength.

Furthermore, in the illustrated example, since the upper flange portion 13Fu and the lower flange portion 13Fd of the front bent flange 13F are continuous as a unit with the upper bent flange 13U and the lower bent flange 13D specially provided on the upper edge and the lower edge respectively of the plate main body 13M so as to correspond to the two front upper and lower threaded hole portions Sfu and Sfd, the flexural rigidity of the plate main body 13M can be further enhanced, and the support rigidity of the front and rear threaded hole portions Sfu and Sru outside the arm open end face 10a can be further increased.

Furthermore, since an integral assembly of the trailing arm 10, the spindle support plate 13, and the spindle 14 can be handled as a subassembly (small assembly), the number of components can be reduced, and the assembly efficiency of a vehicle can be enhanced. Moreover, since the above-mentioned bolt B only needs to have a length sufficient for being screwed into the threaded hole portion of the spindle base plate 14b in order to secure the brake related plate-shaped component (back plate P), it is unnecessary to specially provide a weld nut on the reverse side of the spindle support plate 13, and it is therefore possible to reduce the weight of the suspension by a corresponding amount. Furthermore, since the spindle support plate 13 is directly fixed to the rear end part of the trailing arm 10 without a large bracket, it is possible to increase the rigidity of the above-mentioned subassembly (small assembly) by reducing the amount of offset between the spindle axis L and the main cross-section of the trailing arm 10.

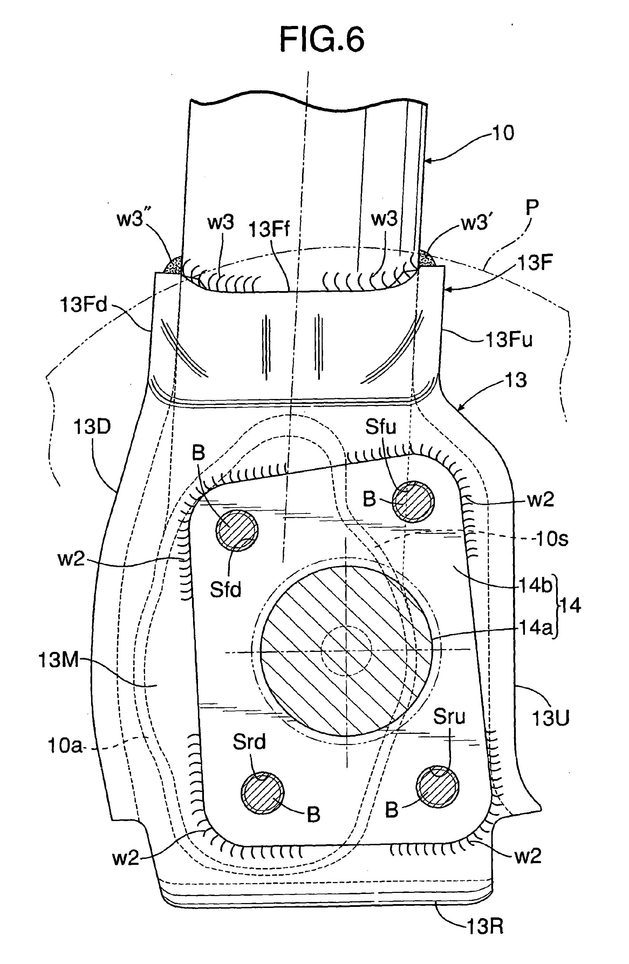

Furthermore, FIG. 6 shows .a first modification example of the first embodiment. This modification example is different from the first embodiment in terms of an upper bent flange 13U and a lower bent flange 13D formed integrally with the upper edge and the lower edge of a plate main body 13M respectively being formed not only in a region corresponding to two, that is, front upper and lower threaded hole portions Sfu and Sfd, but also in a long region throughout substantially the whole region in the longitudinal direction of the plate main body 13M. The arrangement is otherwise basically the same as that of the first embodiment.

The same operational effects as those of the first embodiment are also achieved in this modification example and, moreover, since the upper bent flange 13U and the lower bent flange 13D are formed over a wide region, the flexural rigidity of the plate main body 13M is further increased.

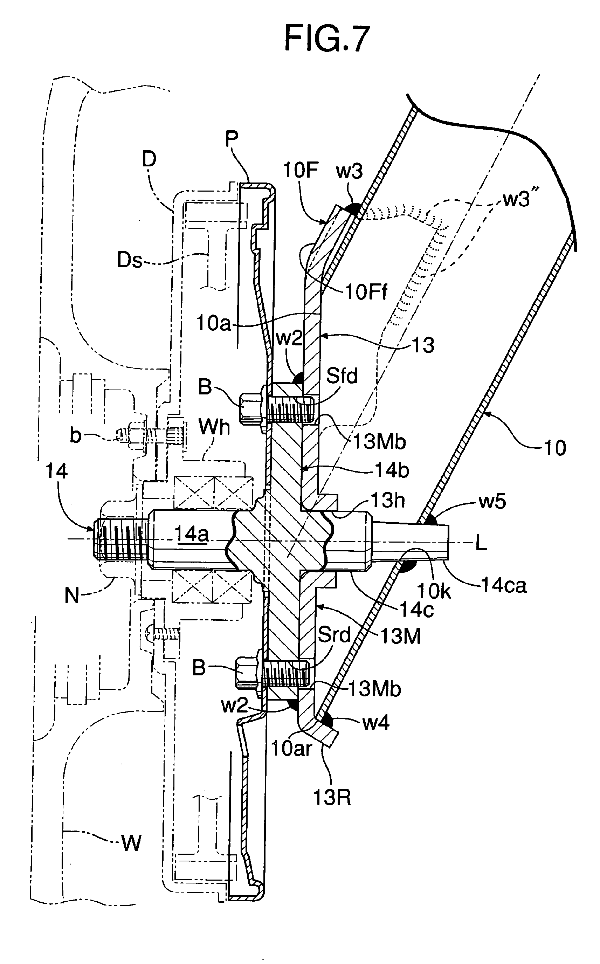

Furthermore, FIG. 7 shows a second modification example of the first embodiment. In this modification example, a spindle support hole 13h is formed by burring in a substantially central part of a plate main body 13M of a spindle support plate 13, and a base shaft portion 14c projectingly provided on a back face of a spindle base plate 14b coaxially with a spindle main body 14a is press-fitted into the spindle support hole 13h. A small-diameter forward end portion 14ca of the base shaft portion 14c of a spindle 14 runs through an opening 10k formed on an inside wall of a rear end part of a trailing arm 10 from the inside to the outside and is fixed thereto by a weld w5.

The same operational effects as those of the preceding embodiments can also be achieved in this modification example. Furthermore, since the extremity of the spindle 14 press-fitted into the spindle support hole 13h is made to run through the opening 10k of the trailing arm 10 from the inside to the outside and is fixed thereto by the weld w5, the rigidity with which the spindle 14 is mounted on the trailing arm 10 and the spindle support plate 13 can be further improved, thus contributing to an improvement in the toe rigidity and the camber rigidity of a suspension. Moreover, since an area of the weld w5 is sufficiently far from the spindle support plate 13, there is no possibility of heat causing thermal distortion of the spindle support plate 13.

### EMBODIMENT 2

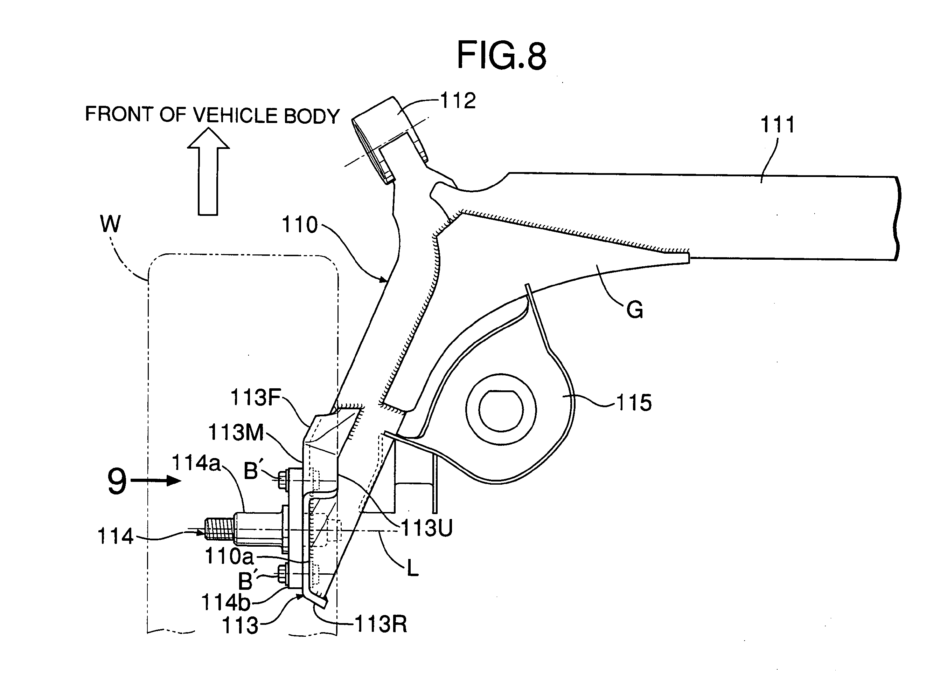

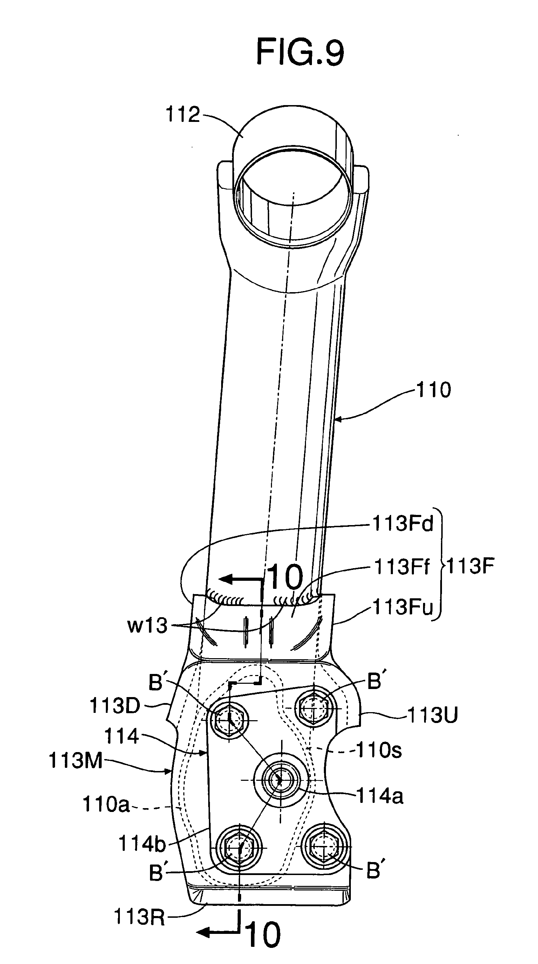

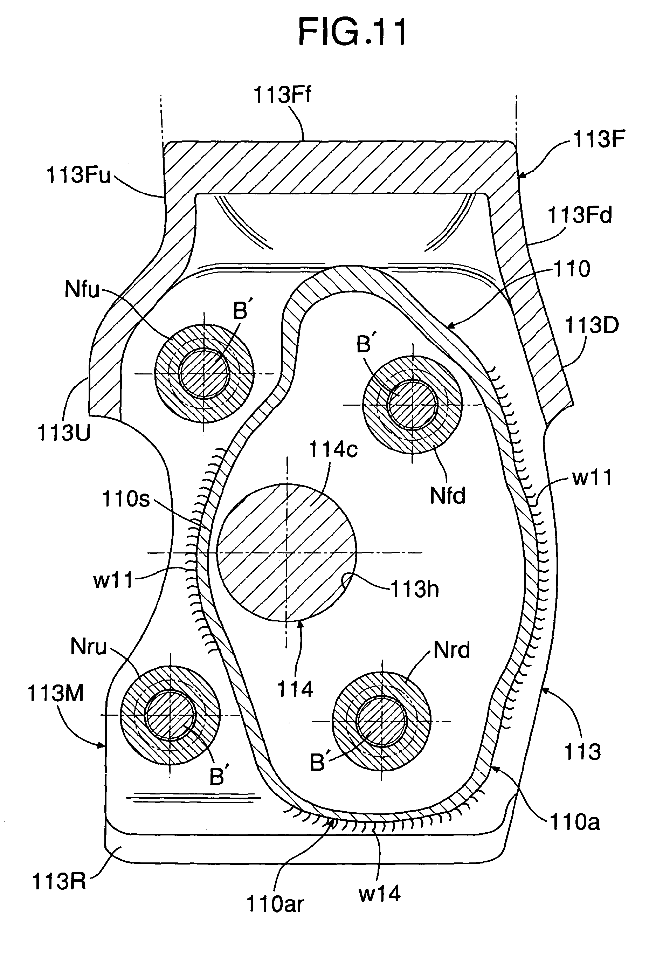

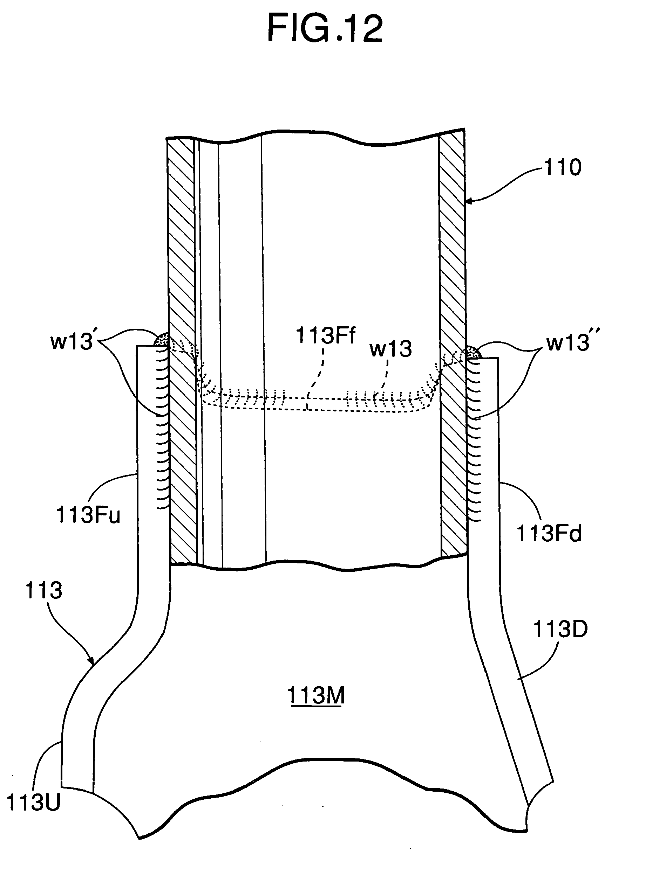

A second embodiment of the present invention is now explained by reference to FIG. 8 to FIG. 12. Since the basic structure of a torsion beam suspension of the second embodiment is the same as that of the first embodiment, each component is denoted by a number obtained by adding 100 to the reference numerals and symbols of the corresponding component of the first embodiment, and explanation of the basic structure is not repeated. It is mainly parts that are different from the first embodiment that are explained below.

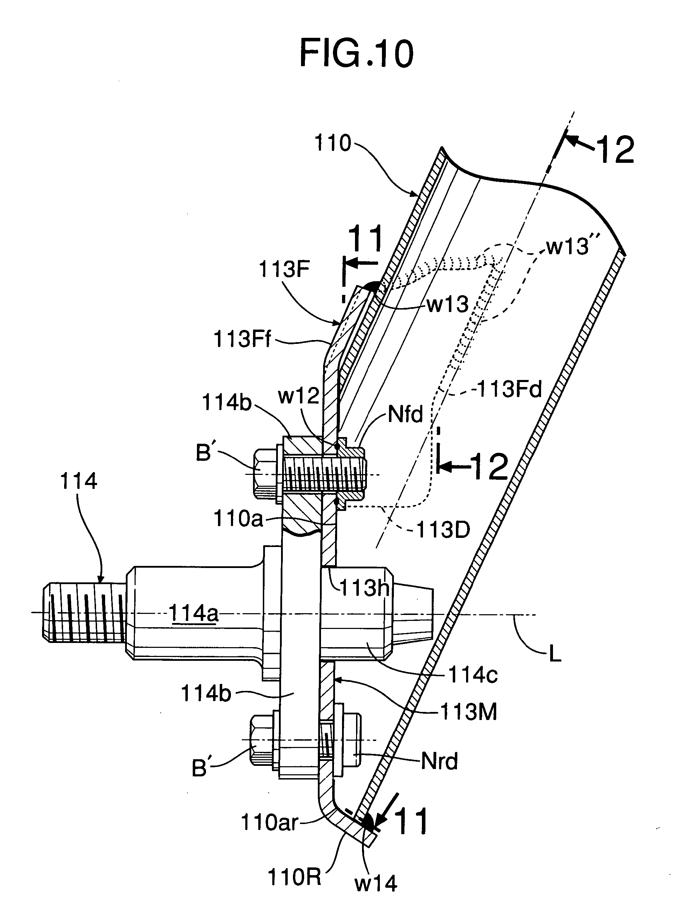

A spindle support plate 113 has a substantially rectangular plate main body 113M, and an open end face 110a at the rear end of a trailing arm 110 is butt-welded w11 to the rear face of the plate main body 113M. The surface of the plate main body 113M (left-hand face in FIG. 10) is a flat mounting seat face for a spindle 114, and the reverse side thereof is provided with four nuts Nfu, Nfd, Nru, and Nrd as four threaded hole portions into which four bolts B' for securing the spindle 114 to the plate main body 113M are screwed, the four nuts Nfu, Nfd, Nru, and Nrd being provided spaced from each other at front, rear, upper, and lower positions relative to a spindle axis L. Among the four nuts, at least any one of the nuts (in the illustrated example, the two at the upper front and rear), that is, Nfu and Nru, are positioned outside the open end face 110a, the other nuts Nfd and Nrd (in the illustrated example, the two at the lower front and rear) are positioned inside the open end face 110a, and each of the nuts Nfu, Nfd, Nru, and Nrd is secured to the plate main body 113M by a projection weld w12.

Furthermore, a front bent flange 113F and a rear bent flange 113R having the same structure as that of the first embodiment are provided integrally with a front end part and a rear end part of the plate main body 113M respectively. The front bent flange 113F extends forward along the outer face of the rear end part of the trailing arm 110 and its front edge is welded w13 to the outer face of the rear end part, and the rear bent flange 113R engages with a rear edge part of the trailing arm 110 and is welded w14 thereto.

The front bent flange 113F is formed so as to have a substantially U-shaped cross-section by integrating together a front flange portion 113Ff, an upper flange portion 113Fu, and a lower flange portion 113Fd that abut against an outer face, an upper face, and a lower face of the rear end part respectively so as to clasp the rear end part of the trailing arm 110. The front flange portion 113Ff is slightly bent so as to substantially follow the outer periphery of the rear end part of the trailing arm 110, the forward edge (that is, the front edge) of the front flange portion 113Ff, apart from its central expanded portion, is welded w13 to the outer face of the arm rear end part, the upper flange portion 113Fu has its front edge and inner edge welded w13' to the upper face of the arm rear end part, and the lower flange portion 113Fd has its front edge and inner edge welded w13" to the lower face of the arm rear end part.

Furthermore, an upper bent flange 113U and a lower bent flange 113D are provided so as to be connected integrally to the upper edge and the lower edge of the plate main body 113M, the upper bent flange 113U and the lower bent flange 113D being bent toward the inside of a vehicle body so as to correspond to the two front upper and lower nuts Nfu and Nfd respectively, and front end sides of the upper bent flange 113U and the lower bent flange 113D are continuous as a unit with the upper flange portion 113Fu and the lower flange portion 113Fd respectively.

An expanded tube portion 110s is formed on an upper half of the rear end part of each of the trailing arms 110, the expanded tube portion 110s protruding upward so as to pass a joining line, or the vicinity thereof, that joins the axes of the two nuts Nfu and Nru, while a top part of the open end face 110a at the arm rear end goes around the two upper front and rear nuts Nfu and Nru (that is, outside the open end face 110a) along the peripheral directions thereof. This expanded tube portion 110s is formed simultaneously in a step of forming a clearance shape for the above-mentioned two nuts Nfu and Nru, and in this case since the trailing arm 110 has a substantially linear pipe structure, forming of the expanded tube portion 110s is relatively easily carried out.

Furthermore, the open end face 110a at the rear end of the trailing arm 110 and the plate main body 113M are welded w11 along the peripheral direction of the open end face 110a apart from at least a region corresponding to the two upper front and rear nuts Nfu and Nru (moreover, in the illustrated example, a front end part region).

Moreover, the rear bent flange 113R is in intimate contact with a chamfered portion 110ar formed in a rear end part of the open end face 110a at the rear end of the trailing arm 110, and the rear edge of the chamfered portion 110ar is welded w14 to the rear bent flange 113R.

Furthermore, a spindle support hole 113h is formed in a substantially central part of the plate main body 113M through which the spindle axis L passes, the spindle support hole 113h running through from the interior to the exterior of the plate main body 113M. The spindle 114 includes a stepped shaft-shaped spindle main body 114a axially supporting a wheel W, a rectangular flange-shaped spindle base plate 114b formed integrally with a base of the spindle main body 114a, and a base shaft portion 114c projectingly provided on the back side of the spindle base plate 114b coaxially with the spindle main body 114a, the base shaft portion 114c being fitted into and supported by the spindle support hole 113h, and the spindle base plate 114b being superimposed on the surface of the plate main body 113M of the spindle support plate 113. The spindle base plate 114b is secured to the spindle support plate 113 via bolts B' that run through bolt through holes provided in the spindle base plate 114b and the plate main body 113M and are screwed into the nuts Nfu, Nfd, Nru, and Nrd.

As hereinbefore described, in accordance with the structure of the second embodiment, the effects of specially providing the front bent flange 113F and the rear bent flange 113R on the front end part and the rear end part of the plate main body 113M of the spindle support plate 113 respectively are the same as those of the first embodiment.

In the present embodiment, the nuts Nfu, Nfd, Nru, and Nrd can be fixed to the plate main body 113M easily and appropriately by the projection weld w12, and it is possible to ensure that there is a sufficient thread length without specially machining a thread in the plate main body 113M itself, thus saving cost. Furthermore, when it is necessary to replace either of the spindle 114 or the trailing arm 110 due to wear, deformation, etc., only one thereof needs to be replaced, and the cost of replacement can be reduced by a corresponding amount.

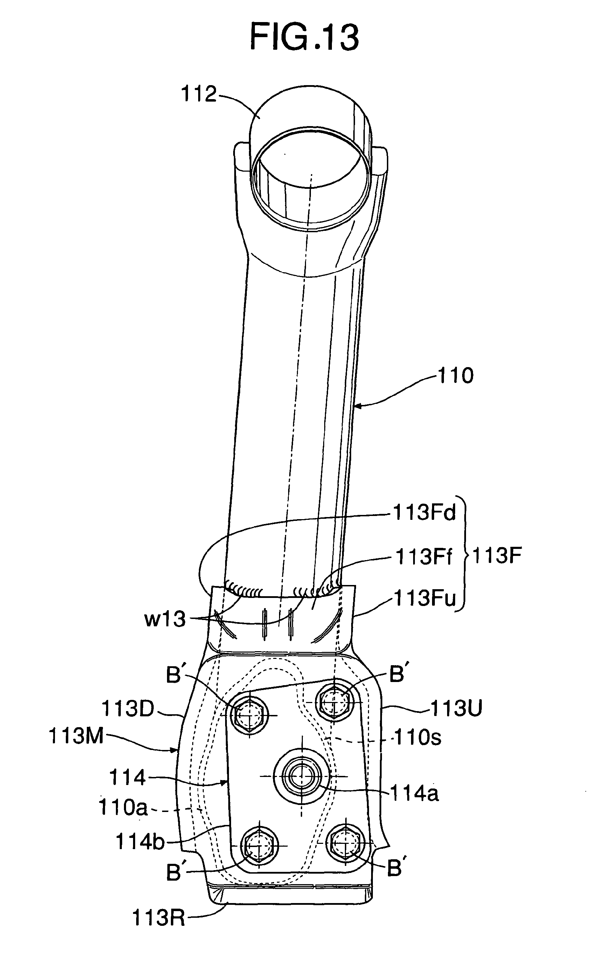

FIG. 13 shows a first modification example of the second embodiment. This modification example is different from the second embodiment only in terms of an upper bent flange 113U and a lower bent flange 113D formed integrally with the upper edge and the lower edge of a plate main body 113M being formed not only in a region corresponding to two front upper and lower nuts Nfu and Nfd but also in a long region throughout substantially the whole region in the longitudinal direction of the plate main body 113M.

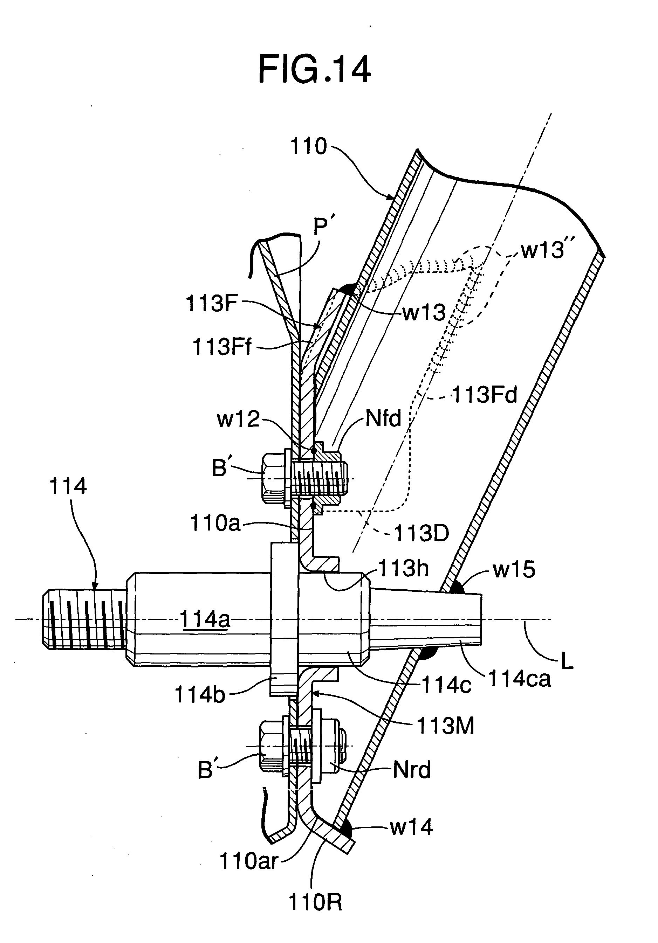

FIG. 14 shows a second modification example of the second embodiment. In this modification example, bolts B' screwed into nuts Nfu, Nfd, Nru, and Nrd as four threaded hole portions provided spaced from each other at front, rear, upper, and lower positions relative to a spindle axis L are not used for fastening the spindle 114 onto an outer face of the spindle support plate 113 as in the first embodiment, but are used for fastening a back plate P superimposed on an outer face of a spindle support plate 113, and this back plate P forms a brake related plate-shaped component.

In this modification example, a spindle support hole 113h is formed by burring in a substantially central part of a plate main body 113M, and a base shaft portion 114c projectingly provided on the back side of a spindle base plate 114b formed in a small-diameter disk shape so as to be coaxial with a spindle main body 114a is press-fitted into the spindle support hole 113h. A small-diameter forward end portion 114ca of the base shaft portion 114c runs through from the inside to the outside of an opening 110k formed in an inner wall of a rear end part of a trailing arm 110 and is welded w15 thereto.

Embodiments of the present invention are explained in detail above, but the present invention may be modified in a variety of ways as long as the modifications do not depart from the spirit and scope of the present invention.

For example, in the first embodiment and the first and second modification examples thereof, the spindle base plate 14b is secured to the spindle support plate 13 via the weld w2, but it may be secured by securing means other than welding, such as, for example, crimping or screwing.

Furthermore, in the second embodiment and the first modification example thereof, only the spindle base plate 114b is superimposed on the spindle support plate 113 and secured by the bolt B', but also in this second embodiment and the first modification example thereof, as in the first embodiment, the spindle base plate 114b and a brake-related plate-shaped component P (e.g. a back plate or a splash plate) may be superimposed (in this case, either may be disposed on the outside), and the spindle base plate 114b and the plate-shaped component may be secured together to the spindle support plate 113 by the bolt B'. In the second modification example of the second embodiment, the spindle base plate 114b has a small-diameter disc shape, but in this second modification example also, the spindle base plate 114b may be formed in the same rectangular shape as that of the second embodiment and the first modification example thereof, and the spindle base plate 114b and the brake related plate-shaped component P may be secured together to the spindle support plate 113 by the bolt B'.

Furthermore, in the first embodiment and the first modification example thereof, and the second embodiment and the first modification example thereof, the spindle support holes 13h and 113h are formed by pressing or drilling, and instead of such machining the spindle support hole may be formed by burring.

## Claims

1. A torsion beam suspension in which opposite ends of a torsion beam (11) extending in a substantially lateral direction of a vehicle body are connected to left and right trailing arms (10) that are formed in a hollow pipe shape, have at least a rear half extending in a substantially longitudinal direction of the vehicle body, and swing vertically, an open end face (10a) at the rear end of each of the left and right trailing arms (10) is formed as a cut face intersecting the arm axis obliquely, the open end face (10a) is butt-welded (w1) to a plate main body (13M) of a spindle support plate (13), and the plate main body (13M) supports a spindle base plate (14b) and a brake related plate-shaped component (P), the spindle base plate (14b) being provided integrally with a spindle (14) for axially supporting a wheel (W), and the brake related plate-shaped component (P) being disposed adjacent to the outer face of the spindle base plate (14b),
**characterized in that** a front bent flange (13F) is provided integrally with a front end part of the plate main body (13M), the front bent flange (13F) extending forward along an outer face of a rear end part of the trailing arm (10) and being welded (w3) to the outer face of the rear end part, and a rear bent flange (13R) is provided integrally with a rear end part of the plate main body (13M), the rear bent flange (13R) engaging with and being welded (w4) to a rear edge part of the trailing arm (10),
the spindle base plate (14b) being superimposed on and secured (w2) to an outer face of the plate main body (13M) and comprising four threaded hole portions (Sfu, Sfd, Sru, Srd) at front, rear, upper, and lower positions with a spindle axis (L) interposed therebetween, and four bolts (B) for fastening the brake related plate-shaped component (P) to the spindle base plate (14b) being screwed into the four threaded hole portions (Sfu, Sfd, Sru, Srd).

2. A torsion beam suspension in which opposite ends of a torsion beam (111) extending in a substantially lateral direction of a vehicle body are connected to left and right trailing arms (110) that are formed in a hollow pipe shape, have at least a rear half extending in a substantially longitudinal direction of the vehicle body, and swing vertically, an open end face (110a) at the rear end of each of the left and right trailing arms (110) is formed as a cut face intersecting the arm axis obliquely, the open end face (110a) is butt-welded (w11) to a plate main body (113M) of a spindle support plate (113), and the plate main body (113M) supports at least a spindle base plate (114b), the spindle base plate (114b) being provided integrally with a spindle (114) for axially supporting a wheel (W),
**characterized in that** a front bent flange (113F) is provided integrally with a front end part of the plate main body (113M), the front bent flange (113F) extending forward along an outer face of a rear end part of the trailing arm (110) and being welded (w13) to the outer face of the rear end part, and a rear bent flange (113R) is provided integrally with a rear end part of the plate main body (113M), the rear bent flange (113R) engaging with and being welded (w14) to a rear edge part of the trailing arm (110),
the plate main body (113M) comprising four threaded hole portions (Nfu, Nfd, Nru, Nrd) at front, rear, upper, and lower positions with a spindle axis (L) interposed therebetween, and four bolts (B') for fastening the spindle base plate (114b) or a brake related plate-shaped component (P) disposed in the vicinity of the spindle base plate (114b) being screwed into the four threaded hole portions (Nfu, Nfd, Nru, Nrd).

3. The torsion beam suspension according to either Claim 1 or 2, wherein at least one of the threaded hole portions (Sfu, Sru; Nfu, Nru) is positioned outside the open end face (10a, 110a).

4. The torsion beam suspension according to either Claim 1 or 2, wherein the front bent flange (13F, 113F) is formed so as to have a substantially U-shaped cross-section by integrating a front flange portion (13Ff, 113Ff), an upper flange portion (13Fu, 113Fu), and a lower flange portion (13Fd, 113Fd) with each other and butt-welding (w3, w3', w3"; w13, w13', w13") to an outer face, an upper face, and a lower face of a rear end part of the trailing arm (10, 110) respectively, and
the upper flange portion (13Fu, 113Fu) and the lower flange portion (13Fd, 113Fd) are continuous as a unit with an upper bent flange (13U, 113U) and a lower bent flange (13D, 113D) provided so as to be connected integrally to the upper edge and the lower edge of the plate main body (13M, 113M) respectively so as to correspond to the two, that is, front upper and lower, threaded hole portions (Sfu, Sfd; Nfu, Nru).

5. The torsion beam suspension according to either Claim 1 or 2, wherein the rear end part of each of the left and right trailing arms (10, 110) is provided with an expanded tube portion (10s, 110s) protruding either upward or downward so as to pass a joining line, or the vicinity thereof, that joins the axes of one of the upper or lower pair of front and rear threaded hole portions (Sfu, Sru; Nfu, Nru) outside the open end face (10a, 110a), while the open end face (10a, 110a) goes around the front and rear threaded hole portions (Sfu, Sru; Nfu, Nru).

6. The torsion beam suspension according to either Claim 1 or 2, wherein the open end face (10a, 110a) at the rear end of each of the left and right trailing arms (10, 110) and the plate main body (13M, 113M) are welded (w1, w11) along the peripheral direction of the open end face (10a, 110a) apart from at least a region that corresponds to the threaded hole portion (Sfu, Sru; Nfu, Nru) outside the open end face (10a, 110a).

7. The torsion beam suspension according to either Claim 1 or 2, wherein the rear bent flange (13R, 113R) is in intimate contact with a chamfered portion (10ar, 110ar) formed in a rear end part of the open end face (10a, 110a) of the trailing arm (10, 110), and the rear edge of the chamfered portion (10ar, 110ar) is welded (w4, w14) to the rear bent flange (13R, 113R).

8. The torsion beam suspension according to either Claim 1 or 2, wherein a base shaft portion (14c, 114c) of the spindle (14, 114) is press-fitted into a spindle support hole (13h, 113h) formed in the plate main body (13M, 113M) by burring.

9. The torsion beam suspension according to Claim 8, wherein the extremity of the base shaft portion (14c, 114c) of the spindle (14, 114) runs through the interior of the trailing arm (10, 110) and projects outside, and the projecting portion is welded (w5, w15) to the trailing arm (10, 110).

10. The torsion beam suspension according to Claim 1, wherein a through hole (13Mb) or a recess is formed in the plate main body (13M), the through hole (13Mb). or the recess being capable of receiving a shaft end part of the bolt (B) screwed into the threaded hole portion (Sfu, Sfd, Sru, Srd).

11. The torsion beam suspension according to Claim 2, wherein the four threaded hole portions are formed from four nuts (Nfu, Nfd, Nru, Nrd) projection welded (w12) to the plate main body (113M) and arranged so as to be spaced from each other at front, rear, upper, and lower positions relative to a spindle axis (L).
